# EUROPEAN PATENT APPLICATION

(11) **EP 4 656 408 A1**
(43) Date of publication of application: **03.12.2025**
(21) Application number: 24796116.2
(22) Date of filing: 24.04.2024
(51) Int. Cl.: B60B 27/00, B60C 23/00

(54) **HUB BEARING, WHEEL RIM DEVICE AND VEHICLE**

(30) Priority: 28.04.2023 CN 202321006721 U
(71) Applicant: BYD Company Limited, Shenzhen, Guangdong 518118 (CN)
(72) Inventor: DENG, Anpei, Shenzhen, Guangdong 518118 (CN); HE, Yuanbao, Shenzhen, Guangdong 518118 (CN); YE, Jianfeng, Shenzhen, Guangdong 518118 (CN)
(74) Representative: Taor, Simon Edward William
(86) International application number: PCT/CN2024/089573
(87) International publication number: WO 2024/222740

(57) **Abstract**

Provided are a hub bearing (100), a wheel side apparatus (1000), and a vehicle (10000). The hub bearing includes a hub flange (30) that rotates synchronously with a tire (3000), a rolling member (20), and a bearing outer ring (10) that is sleeved on the hub flange. The rolling member is disposed between the hub flange and the bearing outer ring to allow the hub flange to rotate relative to the bearing outer ring. The bearing outer ring is provided with a first channel (11), and a first air port (12) and a second air port (13) that communicate with the first channel. The first air port communicates with an air source (2000). The second air port communicates with the tire through a rotary air chamber (220) sleeved on the bearing outer ring.

## Description

### CROSS-REFERENCE TO RELATED APPLICATIONS

This application is based on Chinese Patent Application No. 202321006721.4, filed on April 28, 2023 and entitled "HUB BEARING, WHEEL SIDE APPARATUS, AND VEHICLE", and claims priority to the foregoing Chinese Patent Application, which is incorporated herein by reference in its entirety.

### TECHNICAL FIELD

This application belongs to the technical field of hub bearings, and in particular to a hub bearing, and a wheel side apparatus and a vehicle having the same.

### BACKGROUND

In a related technology, some vehicles are provided with active inflation/deflation systems. A tire pressure is adjusted to reduce tire wear and driving resistance. However, rotary seal assemblies in the active inflation/deflation systems usually affect a service life of hub bearings disposed in the vehicles, even affecting safety of operation of the vehicles.

### SUMMARY

Therefore, this application provides a hub bearing. Use of the hub bearing is not affected by a rotary seal assembly in an active inflation/deflation system.

A hub bearing according to a first aspect of this application includes: a hub flange, the hub flange is configured to rotate synchronously with a tire; a rolling member; and a bearing outer ring, the bearing outer ring is sleeved on the hub flange, the rolling member is disposed between the hub flange and the bearing outer ring to allow the hub flange to rotate relative to the bearing outer ring, the bearing outer ring is provided with a first channel, and a first air port and a second air port that communicate with the first channel, the first air port is configured to communicate with an air source, and the second air port is capable of communicating with the tire through a rotary air chamber sleeved on the bearing outer ring.

In the hub bearing according to the first aspect of this application, the bearing outer ring is provided with a first channel, and a first air port and a second air port that communicate with the first channel, and the second air port is capable of communicating with the tire through a rotary air chamber sleeved on the bearing outer ring, thereby facilitating an arrangement of a seal assembly forming a rotary air chamber. In addition, the hub bearing does not affect heat dissipation performance of the seal assembly, so that a service life of the seal assembly is prolonged. In addition, the hub bearing is not affected in use by the seal assembly in the active inflation/deflation system, so that safety of operation of a vehicle is not affected.

Optionally, the first air port is a through hole that passes through an outer wall of the bearing outer ring; and/or the second air port is a through hole that passes through the outer wall of the bearing outer ring.

Optionally, a direction of airflow passing through the first air port is perpendicular to an axial direction of the bearing outer ring; and/or a direction of airflow passing through the second air port is perpendicular to the axial direction of the bearing outer ring.

Optionally, the first channel extends along the axial direction of the bearing outer ring.

Optionally, the bearing outer ring further includes a blocking portion, and the blocking portion is disposed in the first channel and located on one side that is of the second air port and that is away from the first air port to block one end of a length of the first channel.

Optionally, the bearing outer ring is provided with a boss extending outward along a radial direction of the bearing outer ring, and the boss is cylindrical to communicate with the first air port.

Optionally, at least a part of the boss is provided with internal threads configured to connect to a first connection pipe in a threaded manner, and the first connection pipe is configured to connect the first air port and the air source.

Optionally, at least a part of the outer wall of the bearing outer ring is provided with a friction-reducing agent.

Optionally, the hub flange includes a flange plate, the flange plate is provided with a via hole through which a second connection pipe passes, and the second connection pipe is configured to allow communication between the rotary air chamber and the tire.

Optionally, the flange plate is provided with a plurality of fastening holes configured to fasten the flange plate and a rotary seal assembly, and the rotary seal assembly is provided with the rotary air chamber.

Optionally, the plurality of fastening holes are located on a same circumference.

A wheel side apparatus according to a second aspect of this application includes a rotary seal assembly and the hub bearing according to the first aspect of this application. The rotary seal assembly is provided with the rotary air chamber. The rotary seal assembly is sleeved on the bearing outer ring and is fastened to the hub flange to rotate synchronously with the hub flange.

Optionally, the rotary seal assembly includes a seal assembly and a rotary bracket. The rotary bracket is fastened to the hub flange. The seal assembly is fastened to the rotary bracket. The seal assembly is sleeved on the bearing outer ring and is in rotatable contact with the bearing outer ring. Along an axial direction of the bearing outer ring, two sides of the seal assembly are separately abutted against an outer wall of the bearing outer ring to form the rotary air chamber.

Optionally, a thickness of a part that is of the seal assembly and that is in rotatable contact with the bearing outer ring ranges from 0.5 mm to 1.5 mm.

A vehicle according to a third aspect of this application includes an air source, a tire, and the wheel side apparatus according to the second aspect of this application. The air source is configured to be disposed on a vehicle body. The air source is configured to selectively communicate with the first air port. The rotary seal assembly is configured to selectively communicate with the tire.

Additional aspects and advantages of this application will be set forth in part in the following description, and in part will become apparent from the following description, or may be learned through the practice of this application.

### BRIEF DESCRIPTION OF DRAWINGS

The above and/or additional aspects and advantages of this application become apparent and easily understandable from the description of embodiments with reference to the following drawings, in which:
FIG. 1 is a diagram 1 of a structure of a hub bearing according to an embodiment of this application;
FIG. 2 is a diagram 2 of a structure of a hub bearing according to an embodiment of this application;
FIG. 3 is a diagram 3 of a structure of a hub bearing according to an embodiment of this application;
FIG. 4 is a cross-sectional view of FIG. 2 taken along A-A;
FIG. 5 is a partial enlargement view of A in FIG. 4;
FIG. 6 is a partial enlargement view of B in FIG. 4;
FIG. 7 is a diagram 1 of a structure of a wheel side apparatus according to an embodiment of this application;
FIG. 8 is a diagram 2 of a structure of a wheel side apparatus according to an embodiment of this application; and
FIG. 9 is a diagram of a structure of a vehicle according to an embodiment of this application.

### Reference numerals:

100: Hub bearing;
10: Bearing outer ring; 11: first channel; 12: first air port; 13: second air port; 14: blocking portion; 15: boss; 151: internal thread; 16: friction-reducing agent; 17: connection portion;
20: rolling member; 21: a rolling member body; 22: rolling member fastening frame;
30: hub flange; 31: flange body; 311: flange central hole; 32: flange plate; 321: via hole; 322: fastening hole; 323: fastening column; 324: brake disc fastening hole;
40: small inner ring;
200: rotary seal assembly;
210: seal assembly; 220: rotary air chamber; 230: rotary bracket; 231: rotary channel;
1000: wheel side apparatus;
10000: vehicle; 2000: air source; 3000: tire; 4000: vehicle body.

### DESCRIPTION OF EMBODIMENTS

Embodiments of this application are described in detail below, examples of which are illustrated in the accompanying drawings, where same or similar reference numerals throughout indicate same or similar elements or elements having same or similar functions. The embodiments described below with reference to the accompanying drawings are examples and are intended to explain this application, and shall not be construed as a limitation on this application.

The following disclosure provides many different embodiments or examples to achieve different structures of this application. In order to simplify the disclosure of this application, components and arrangements of a specific example are described below. Certainly, the components and arrangements are merely examples, and are not intended to limit this application. In addition, in this application, refer to numbers and/or letters repeatedly in different examples. This repetition is for the purpose of simplicity and clarity, and does not in itself indicate a relationship between various embodiments and/or arrangements discussed. In addition, this application provides various examples of specific processes and materials, but a person of ordinary skill in the art may be aware of applicability of other processes and/or use of other materials.

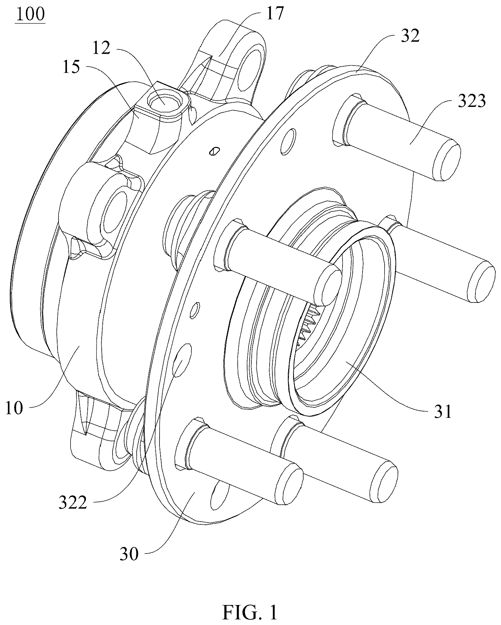

A hub bearing 100 according to an embodiment of this application is described below with reference to FIG. 1 to FIG. 8.

It should be noted that the hub bearing 100 provided in this embodiment of this application may be applied to a vehicle 10000. The hub bearing 100 is connected to a transmission shaft of the vehicle 10000 in a transmission manner, and transmits rotation of the transmission shaft to a wheel. The hub bearing 100 may cooperate with a rotary seal assembly 200 to inflate and deflate a tire 3000 of the vehicle 10000.

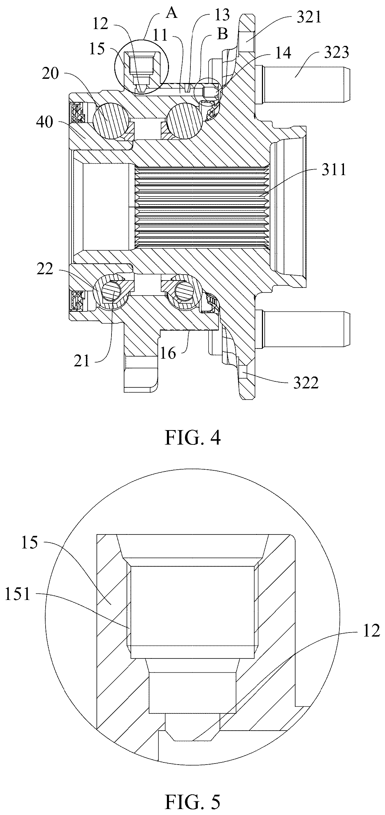

As shown in FIG. 1 and FIG. 4, the hub bearing 100 includes a hub flange 30, a rolling member 20, and a bearing outer ring 10. The hub flange 30 is configured to rotate synchronously with the tire 3000. The bearing outer ring 10 is sleeved on the hub flange 30. The rolling member 20 is disposed between the hub flange 30 and the bearing outer ring 10 to allow the hub flange 30 to rotate relative to the bearing outer ring 10. The bearing outer ring 10 is provided with a first channel 11, and a first air port 12 and a second air port 13 that communicate with the first channel 11. The first air port 12 is configured to communicate with an air source 2000, so that the second air port 13 is capable of communicating with the tire 3000 through a rotary air chamber 220 sleeved on the bearing outer ring 10.

It may be understood that the hub flange 30 rotates synchronously with the tire 3000. The bearing outer ring 10 is stationary with respect to a vehicle body 4000. The air source 2000 is disposed on the vehicle body 4000. The air source 2000 communicates with the first air port 12. The second air port 13 communicates with the tire 3000 through the rotary air chamber 220. When the tire 3000 is inflated, gas in the air source 2000 enters the rotary air chamber 220 from the second air port 13 after entering the first channel 11 through the first air port 12, and finally enters a chamber of the tire 3000. When the tire 3000 is deflated, a deflation valve may be disposed on an air path between the air source 2000 and the first air port 12. Gas in the tire 3000 enters the first channel 11 through the second air port 13 after passing through the rotary air chamber 220, and is discharged into an atmosphere through the deflation valve after exiting through the first air port 12, thereby deflating the tire 3000.

In a related technology, a seal assembly is disposed between a bearing outer ring and a bearing inner ring to form a rotary air chamber, and a channel is disposed on each of the bearing inner ring and the bearing outer ring to communicate with the air source 2000 and the tire 3000, so that a structure of a bearing is complex, and further, the seal assembly forming the rotary air chamber is disposed between the bearing inner ring and the bearing outer ring. There are the following problems: First, it is difficult to dispose the seal assembly due to a space limitation; second, the seal assembly generates heat due to rotational friction, and the structure is not conducive to heat dissipation of the seal assembly; and third, the seal assembly is a quick-wear member, and is more easily worn when the seal assembly generates heat due to friction and heat is not easily dissipated. The seal assembly is located inside the bearing and is not easily replaced. If the bearing is replaced, a service life of the bearing is greatly shortened. If the bearing is not replaced in time, a worn seal assembly may be between the bearing outer ring and the bearing inner ring, thereby interfering with relative movement of the bearing inner ring, the rolling member, and the bearing outer ring. In this way, safety of operation of the vehicle 10000 is affected.

However, in this application, only the bearing outer ring 10 is provided with a first channel 11, and a first air port 12 and a second air port 13 that communicate with the first channel 11, so that a structure is simple, and an air path channel through which the first air port 12 communicates with the air source 2000 is conveniently disposed. In addition, the second air port 13 is capable of communicating with the tire 3000 through the rotary air chamber 220 sleeved on the bearing outer ring 10. The seal assembly 210 forming the rotary air chamber 220 is located outside the entire hub bearing 100. The seal assembly 210 is easily disposed, and has good heat dissipation. Wear of the seal assembly 210 caused by heat generated by the seal assembly 210 due to friction is reduced. In addition, it is only needed to replace the seal assembly 210 after the seal assembly 210 is worn, without shortening a service life of the hub bearing 100 or interfering with operation of the hub bearing 100. Therefore, a situation in which safe operation of the vehicle 10000 is affected due to damage of the seal assembly 210 is avoided, so that the seal assembly is applied to the vehicle 10000 in mass production more easily.

The hub bearing 100 may be a third-generation bearing, including a hub flange 30, a rolling member 20, and a bearing outer ring 10. The rolling member 20 includes a rolling member body 21 and a rolling member fastening frame 22. The rolling member body 21 may be spherical, cylindrical, and the like. The rolling member fastening member 22 is disposed between the hub flange 30 and the bearing outer ring 10 and is fastened by a small inner ring 40. The hub flange 30 is provided with a flange body 31 and a flange plate 32. The flange body 31 is provided with a flange central hole 311. The flange central hole 311 of a driving wheel is provided with a spline to facilitate connection to the transmission shaft in a transmission manner. The flange plate 32 is provided with a plurality of fastening columns 323 to be fastened to a brake disc, a wheel rim, and the like. The brake disc may be sleeved on a plurality of fastening columns 323 and fastened by using a brake disc fastening hole 324 disposed on the flange plate 32.

In some embodiments of this application, as shown in FIG. 4, the first air port 12 is a through hole that passes through an outer wall of the bearing outer ring 10; and/or the second air port 13 is a through hole that passes through the bearing outer ring 10. In this way, the outer wall of the bearing outer ring 10 is provided with a through hole that communicates with the first channel 11 to dispose the first air port 12 and the second air port 13. In addition, in this way, a connection pipe between the first air port 12 and the air source 2000 may be arranged outside the bearing outer ring 10 along a radial direction. The second air port 13 conveniently communicates with the rotary air chamber 220 sleeved on the bearing outer ring 10, so that the wheel side apparatus 1000 of this application is more conveniently disposed.

In some embodiments of this application, as shown in FIG. 4, a direction of airflow passing through the first air port 12 is perpendicular to an axial direction of the bearing outer ring 10; and/or a direction of airflow passing through the second air port 13 is perpendicular to the axial direction of the bearing outer ring 10.

It may be understood that the direction of airflow passing through the first air port 12 is perpendicular to the axial direction of the bearing outer ring 10. In other words, a pipe forming the first air port 12 is perpendicular to the axial direction of the bearing outer ring 10, thereby facilitating disposing the first air port 12, and reducing air path resistance to some extent. The direction of airflow passing through the second air port 13 is perpendicular to the axial direction of the bearing outer ring 10. In other words, a pipe forming the second air port 13 is perpendicular to the axial direction of the bearing outer ring 10, thereby facilitating disposing the second air port 13, and reducing air path resistance to some extent. It may be understood that airflow passing through the first air port 12 may be perpendicular to the axial direction of the bearing outer ring 10, or airflow passing through the second air port 13 may be perpendicular to the axial direction of the bearing outer ring 10, or airflow passing through the first air port 12 and airflow passing through the second air port 13 may be both perpendicular to the axial direction of the bearing outer ring 10.

In some embodiments of this application, as shown in FIG. 4, the first channel 11 extends along the axial direction of the bearing outer ring 10. In this way, a size of the bearing outer ring in a radial direction may be reduced, thereby reducing a size of the hub bearing 100 in the radial direction, and facilitating miniaturization of the hub bearing 100.

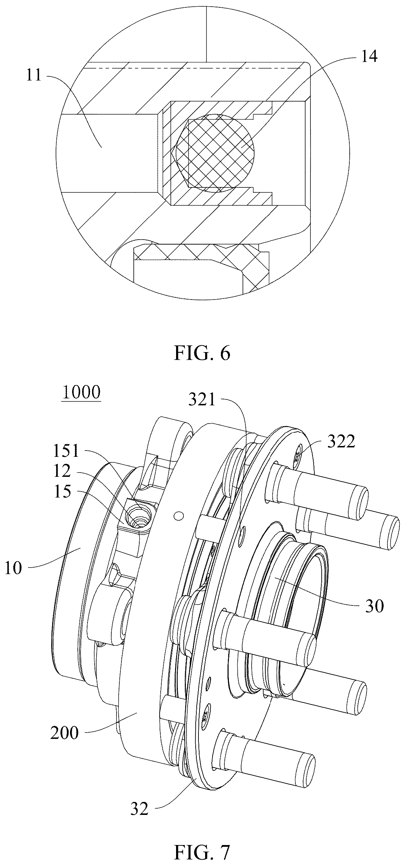

In some embodiments of this application, as shown in FIG. 4 and FIG. 6, the bearing outer ring 10 further includes a blocking portion 14. The blocking portion 14 is disposed in the first channel 11 and located on one side that is of the second air port 13 and that is away from the first air port 12 to block one end of a length of the first channel 11.

It may be understood that an end face of the bearing outer ring 10 may be provided with the first channel 11 extending along the axial direction of the bearing outer ring 10, and then a blocking portion 14 is disposed on one side that is of the second air port 13 and that is away from the first air port 12 to block one end of the first channel 11, that is, block a process hole, so that gas can enter the first channel 11 from the first air port 12 and then flow out of the second air port 13. It should be noted that the blocking portion 14 may be a steel ball and the like, and is interference fit in the first channel 11 in a press-fitting manner, thereby achieving a better sealing effect after blocking.

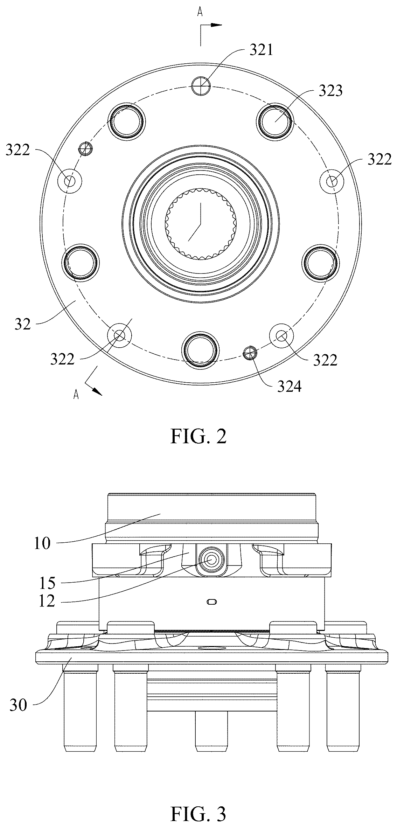

In some embodiments of this application, as shown in FIG. 3 and FIG. 4, the bearing outer ring 10 is provided with a boss 15 extending outward along a radial direction. The boss 15 is cylindrical to communicate with the first air port 12. The bearing outer ring 10 is provided with the boss 15 extending outward along the radial direction, and the cylindrical boss 15 communicates with the first air port 12, thereby facilitating connection between the first connection channel and the first air port 12 described later.

In some embodiments of this application, as shown in FIG. 4 and FIG. 5, at least a part of the boss 15 is provided with internal threads 151 configured to connect to a first connection pipe in a threaded manner. The first connection pipe is configured to connect the first air port 12 and the air source 2000. The first connection pipe is connected to the boss 15 in a threaded manner, so that the first connection channel may be quickly and detachably connected to the boss 15. It should be noted that the first connection pipe may be provided with a quick connector. The quick connector is connected to the boss 15 in a threaded manner, and has a good sealing effect. The bearing outer ring 10 may be further provided with a connection portion 17 protruding outward in a radial direction, thereby helping to fasten the bearing outer ring 10 to a steering knuckle and the like.

In some embodiments of this application, as shown in FIG. 4, at least a part of the outer wall of the bearing outer ring 10 is provided with a friction-reducing agent 16, such as chromium oxide. That is, at least a rotational friction surface of the bearing outer ring 10 is hardened, so that the rotational friction surface has high hardness, wear resistance, and high-temperature resistance. In addition, rotational resistance is reduced, so that the hub bearing 100 and the seal assembly 210 have a long service life and better stability.

In some embodiments of this application, as shown in FIG. 1 and FIG. 2, the hub flange 30 includes a flange plate 32. The flange plate 32 is provided with a via hole 321 through which a second connection pipe passes. The second connection pipe is configured to allow communication between the rotary air chamber 220 and the tire 3000. It should be noted that the hub flange 30 further includes a flange body 31. The flange body 31 is fastened to the flange plate 32. The hub bearing 100 may be applied to a drive wheel and a non-drive wheel. It may be understood that for the hub bearing 100 applied to the drive wheel, the flange body 31 is further provided with a flange central hole having a spline. The flange body 31 is configured to connect to the transmission shaft through the flange central hole in a transmission manner.

The flange plate 32 is provided with the via hole 321, and the second connection pipe configured to allow communication between the rotary air chamber 220 and the tire 3000 can pass through the via hole 321, thereby facilitating stability of the second connection pipe, and further, facilitating miniaturization of the rotary seal assembly 200.

In some embodiments of this application, as shown in FIG. 2, the flange plate 32 is provided with a plurality of fastening holes 322 configured to fasten the flange plate 32 and the rotary seal assembly 200. The rotary seal assembly 200 is provided with the rotary air chamber 220.

The flange plate 32 is provided with a plurality of fastening holes 322, thereby helping to fasten the rotary seal assembly 200 to the flange plate 32.

In some embodiments of this application, the plurality of fastening holes 322 are located on a same circumference.

The plurality of fastening holes 322 are located on the same circumference, thereby improving reliability of fastening the rotary seal assembly 200 to the flange plate 32, and facilitating design of the rotary seal assembly 200 and the flange plate 32.

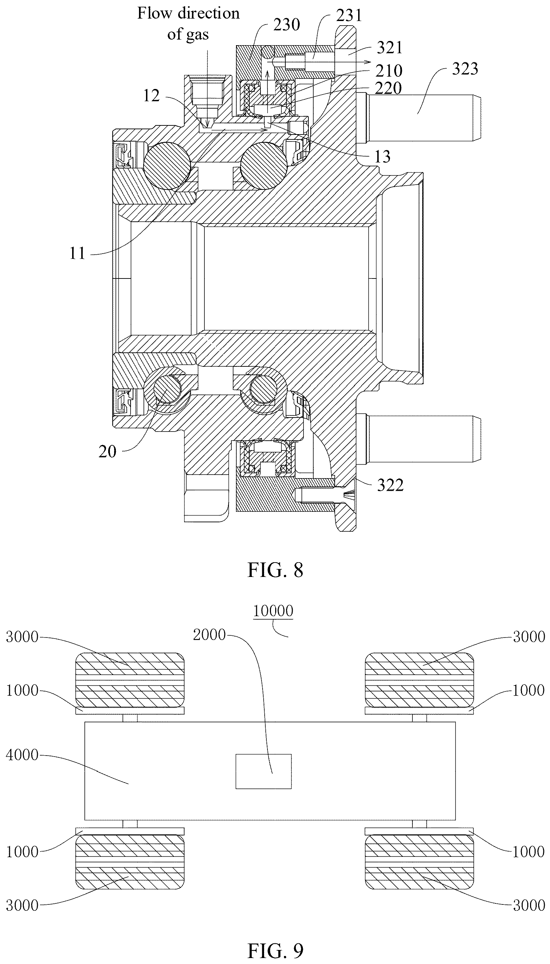

In the wheel side apparatus 1000 according to an embodiment of a second aspect of this application, as shown in FIG. 7 and FIG. 8, the wheel side apparatus 1000 includes a hub bearing 100 and a rotary seal assembly 200. The hub bearing 100 is the hub bearing 100 according to an embodiment of a first aspect of this application. The rotary seal assembly 200 is provided with the rotary air chamber 220. The rotary seal assembly 200 is sleeved on the bearing outer ring 10 and is fastened to the hub flange 30 to rotate synchronously with the hub flange 30.

The hub bearing 100 according to the embodiment of the first aspect of this application are included, and the rotary seal assembly 200 may be sleeved on the bearing outer ring 10. When the rotary seal assembly 200 rotates synchronously with the hub flange 30, heat generated by friction between the rotary seal assembly 200 and the bearing outer ring 10 is easily dissipated. Wear of the rotary seal assembly 200 may be reduced. In addition, it is only needed to replace the rotary seal assembly 200 after the rotary seal assembly 200 is worn, without shortening the service life of the hub bearing 100 or interfering with operation of the hub bearing 100. Therefore, a situation in which safe operation of the vehicle 10000 is affected due to damage of the rotary seal assembly 200 is avoided.

In some embodiments of this application, as shown in FIG. 8, the rotary seal assembly 200 includes a seal assembly 210 and a rotary bracket 230. The rotary bracket 230 is fastened to the hub flange 30. The seal assembly 210 is fastened to the rotary bracket 230. The seal assembly 210 is sleeved on the bearing outer ring 10 and is in rotatable contact with the bearing outer ring 10. Along the axial direction of the bearing outer ring 10, two sides of the seal assembly 210 are respectively located on two sides of the second air port 13, and are both abutted against the outer wall of the bearing outer ring 10 to form the rotary air chamber 220.

It may be understood that the seal assembly 210 may be a pair of sealing rings. Along the axial direction of the bearing outer ring 10, one of the sealing rings is located on one side of the second air port 13, and the other sealing ring is located on the other side of the second air port 13. The two sealing rings are both abutted against the outer wall of the bearing outer ring 10 to form the rotary air chamber 220, thereby facilitating communication between the second air port 13 and the rotary air chamber 220. The rotary bracket 230 is fastened to the hub flange 30. Specifically, the rotary bracket 230 is detachably connected to the hub flange 30 through a fastening hole 322 on the flange plate 32. The seal assembly 210 is fastened to the rotary bracket 230. When the hub flange 30 rotates, the rotary bracket 230 is driven to rotate, thereby driving the seal assembly 210 to rotate relative to the bearing outer ring 10. In addition, when the seal assembly 210 is worn, it is only needed to replace the seal assembly 210. It should be noted that the rotary bracket 230 is provided with a rotary channel 231 communicating with the rotary air chamber 220. The second connection pipe through which the rotary air chamber 220 communicates with the tire 3000 may communicate with the rotary channel 231, and may communicate with the tire 3000 after passing through the via hole 321 disposed in the flange plate 32.

In some embodiments of this application, as shown in FIG. 8, a thickness of a part that is of the seal assembly 210 and that is in rotatable contact with the bearing outer ring 10 ranges from 0.5 mm to 1.5 mm.

The thickness of the part that is of the seal assembly 210 and that is in rotatable contact with the bearing outer ring 10 is designed to range 0.5 mm to 1.5 mm, so that a service life of the seal assembly may be ensured while sealing performance may be ensured.

As shown in FIG. 9, the vehicle 10000 according to an embodiment of a third aspect of this application includes the wheel side apparatus 1000 according to the embodiment of the second aspect of this application, and has all beneficial effects of the wheel side apparatus. Details are not described herein again.

In the description of this application, it should be understood that a directional or positional relationship indicated by terms "center," "longitudinal", "transverse", "length", "width", "thickness", "upper", "lower", "front", "rear", "left", "right", "vertical", "horizontal", "top", "bottom", "inner", "outer", "axial", "radial", "circumferential", and the like is based on a directional or positional relationship shown in the accompanying drawings, which is only for the purpose of facilitating the description of this application and simplifying the description, and is not intended to indicate or imply that an apparatus or element referred to must have a specific direction, be constructed and operated in a specific direction. Therefore, these terms should not be construed as limiting this application.

Furthermore, terms "first" and "second" are used for descriptive purposes only and should not be construed as indicating or implying the relative importance or implicitly indicating the number of the indicated technical features. Thus, features defined with "first" or "second" may explicitly or implicitly include one or more of such features.

In this application, unless otherwise clearly specified and defined, terms "mount", "interconnect", "connect" and "fasten", and the like should be interpreted in their broad senses. For example, the elements may be fastened, detachably connected, or integrally connected; mechanically connected, or electrically connected, or communicated; and directly connected, indirectly connected through an intermediary medium, communicated between interiors of two elements, or interacted between two elements. For those of ordinary skill in the art, the specific meanings of the above terms in this application may be interpreted according to the specific condition.

In this application, unless clearly specified and defined otherwise, the description that a first feature is "above" or "below" a second feature may indicate direct contact between the first feature and the second feature, or indirect contact between the first feature and the second feature through an intermediary medium. Moreover, the description that the first feature is "above", "over" or "on" the second feature may indicate that the first feature is directly above or obliquely above the second feature, or simply indicate that the first feature is at a higher horizontal level than the second feature. The description that the first feature is "below", "beneath" or "under" the second feature may indicate that the first feature is directly below or obliquely below the second feature, or simply indicate that the first feature is at a lower horizontal level than the second feature.

In the description of this specification, the reference terms such as "one embodiment", "some embodiments", "an example", "a specific example", "some examples", and the like mean that the specific features, structures, materials, or characteristics described in conjunction with the embodiment or example are included in at least one embodiment or example of this application. In this specification, the illustrative expressions of the above terms do not necessarily refer to the same embodiment or example. Furthermore, the specific features, structures, materials, or characteristics described may be combined in a suitable manner in any one or more embodiments or examples. In addition, without contradiction to each other, those skilled in the art may combine and integrate different embodiments or examples described in this specification, as well as the features of different embodiments or examples.

Although the embodiments of this application have been shown and described, those of ordinary skill in the art will appreciate that various changes, modifications, substitutions, and variations may be made to the embodiments without departing from the principle and spirit of this application. The scope of this application is defined by the claims and their equivalents.

## Claims

1. A hub bearing (100), comprising:
a hub flange (30), the hub flange (30) is configured to rotate synchronously with a tire (3000);
a rolling member (20); and
a bearing outer ring (10), the bearing outer ring (10) is sleeved on the hub flange (30), the rolling member (20) is disposed between the hub flange (30) and the bearing outer ring (10) to allow the hub flange (30) to rotate relative to the bearing outer ring (10), the bearing outer ring (10) is provided with a first channel (11), and a first air port (12) and a second air port (13) that communicate with the first channel (11), the first air port (12) is configured to communicate with an air source (2000), and the second air port (13) is capable of communicating with the tire (3000) through a rotary air chamber (220) sleeved on the bearing outer ring (10).

2. The hub bearing (100) according to claim 1, wherein the first air port (12) is a through hole that passes through an outer wall of the bearing outer ring (10); and/or the second air port (13) is a through hole that passes through the outer wall of the bearing outer ring (10).

3. The hub bearing (100) according to claim 2, wherein a direction of airflow passing through the first air port (12) is perpendicular to an axial direction of the bearing outer ring (10); and/or
a direction of airflow passing through the second air port (13) is perpendicular to the axial direction of the bearing outer ring (10).

4. The hub bearing (100) according to any one of claims 1 to 3, wherein the first channel (11) extends along the axial direction of the bearing outer ring (10).

5. The hub bearing (100) according to any one of claims 1 to 4, wherein the bearing outer ring (10) further comprises a blocking portion (14), and the blocking portion (14) is disposed in the first channel (11) and located on one side that is of the second air port (13) and that is away from the first air port (12) to block one end of a length of the first channel (11).

6. The hub bearing (100) according to any one of claims 1 to 5, wherein the bearing outer ring (10) is provided with a boss (15) extending outward along a radial direction of the bearing outer ring, and the boss (15) is cylindrical to communicate with the first air port (12).

7. The hub bearing (100) according to claim 6, wherein at least a part of the boss (15) is provided with internal threads (151) configured to connect to a first connection pipe in a threaded manner, and the first connection pipe is configured to connect the first air port (12) and the air source (2000).

8. The hub bearing (100) according to any one of claims 1 to 7, wherein at least a part of the outer wall of the bearing outer ring (10) is provided with a friction-reducing agent (16).

9. The hub bearing (100) according to any one of claims 1 to 8, wherein the hub flange (30) comprises a flange plate (32), the flange plate (32) is provided with a via hole (321) through which a second connection pipe passes, and the second connection pipe is configured to allow communication between the rotary air chamber (220) and the tire (3000).

10. The hub bearing (100) according to claim 9, wherein the flange plate (32) is provided with a plurality of fastening holes (322) configured to fasten the flange plate (32) and a rotary seal assembly (200), and the rotary seal assembly (200) is provided with the rotary air chamber (220).

11. The hub bearing (100) according to claim 10, wherein the plurality of fastening holes (322) are located on a same circumference.

12. A wheel side apparatus (1000), wherein the wheel side apparatus (1000) comprises a rotary seal assembly (200) and the hub bearing (100) according to any one of claims 1 to 11, the rotary seal assembly (200) is provided with the rotary air chamber (220), and the rotary seal assembly (200) is sleeved on the bearing outer ring (10) and is fastened to the hub flange (30) to rotate synchronously with the hub flange (30).

13. The wheel side apparatus (1000) according to claim 12, wherein the rotary seal assembly (200) comprises a seal assembly (210) and a rotary bracket (230), the rotary bracket (230) is fastened to the hub flange (30), the seal assembly (210) is fastened to the rotary bracket (230), the seal assembly (210) is sleeved on the bearing outer ring (10) and is in rotatable contact with the bearing outer ring (10), and along an axial direction of the bearing outer ring (10), two sides of the seal assembly (210) are separately abutted against an outer wall of the bearing outer ring (10) to form the rotary air chamber (220).

14. The wheel side apparatus (1000) according to claim 13, wherein a thickness of a part that is of the seal assembly (210) and that is in rotatable contact with the bearing outer ring (10) ranges from 0.5 mm to 1.5 mm.

15. A vehicle (10000), comprising an air source (2000), a tire (3000), and the wheel side apparatus (1000) according to any one of claims 12 to 14, wherein the air source (2000) is configured to be disposed on a vehicle body (4000), the air source (2000) is configured to selectively communicate with the first air port (12), and the rotary seal assembly (200) is configured to selectively communicate with the tire (3000).
